(19) **Europäisches Patentamt / European Patent Office / Office européen des brevets**

(11) **EP 2 866 117 B1**

(12) **EUROPEAN PATENT SPECIFICATION**

(45) Date of publication and mention
of the grant of the patent:
**15.03.2017 Bulletin 2017/11**

(51) Int Cl.:
**G05D 23/19** *(2006.01)*   **G05B 13/02** *(2006.01)*

(21) Application number: **13190275.1**

(22) Date of filing: **25.10.2013**

(54) **Distributed adaptive and predictive heating control system and method**

Verteiltes adaptives und prädiktives Heizungssteuersystem und entsprechendes Verfahren

Système et procédé de commande de chauffage réparti prédictif et adaptatif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.04.2015 Bulletin 2015/18**

(73) Proprietor: **Fourdeg Oy**
**02210 Espoo (FI)**

(72) Inventors:
• **Kaijärvi, Mikko**
  **00200 Helsinki (FI)**
• **Binder, Martin**
  **02170 Espoo (FI)**
• **Makkonen, Markku**
  **02210 Espoo (FI)**

• **Saunamäki, Jarkko**
  **01200 Vantaa (FI)**

(74) Representative: **Heinonen & Co**
**Attorneys-at-Law Ltd**
**Fabianinkatu 29 B**
**00100 Helsinki (FI)**

(56) References cited:
**EP-A1- 0 208 442      EP-A2- 0 915 300**
**WO-A1-2011/121299   WO-A2-2009/072744**
**US-A- 5 395 042      US-A1- 2013 140 016**

• **M.MOZER, L.VIDMAR, R.DODIER: "The Neurothermostat: Predictive Optimal Control of Residential Heating Systems", NEURAL INFORMATION PROCESSING SYSTEMS 9, 1997, pages 953-959, XP002724514, MA, USA**

## Description

### Technical field

Generally, the invention relates to systems and methods for enclosure heating control. More precisely, the invention relates to adaptive and predictive control systems for adjusting and maintaining an appropriate indoor climate in a water radiator heat-ed building, the building advantageously being divided into zones, enclosures or rooms to which different control criteria may apply.

### Background technology

The current solutions for indoor air temperature in the water radiator heated buildings are based on the heating water temperature control in context of the heat exchanger and water circulation control by thermostats on radiators. Solutions, where the outdoor temperature is taken into account by having an outdoor air temperature sensor giving control to the heat exchanger, have also been proposed. Further, prior solutions have been proposed, where the outdoor air temperature forecast is also applied to control the heat exchanger. In some proposed systems indoor room temperature is measured as samples from limited number of locations using separate sensors inside the building. In all above mentioned systems the actual indoor air temperatures of all the rooms in the building are not known or applied to control the system. The current systems quite often have excessive indoor temperature in some of the rooms when the outdoor temperature suddenly rises.

The known solutions typically support energy saving option by programming desired indoor temperature drop for certain period of time e.g. for night time if the building is empty. However a feature having two or more assignable temperature levels or temperature steering curves per time of the day, day of the week etc. is not often applied because the actual room temperature can't be monitored nor controlled, causing the ramp-up of temperature taking place later than expected or non-uniformly inside the building giving bad indoor air quality perception. Especially during very cold outdoor temperature conditions some parts of the building might fall colder than safe to avoid humidity and respective decay.

Known solutions give consumers the ability to control the indoor temperature by turning the thermostat higher or lower. It is however typical that the actual temperature in different rooms in the building range above and below a desired temperature range. The room level control is often not accurate enough and the room level temperature control range can't be controlled by the building maintenance without extensive measurements and manual tuning of the heating system. Subsequently quite often inhabitants suffer from too low indoor temperature in some parts of the building whereas other parts of the building are constantly too warm.

The current water radiator heating systems and respective piping systems maintenance is typically made reactively. Deteriorated thermostats, radiator valves or piping pressure are typically fixed or tuned reactively based on human complaints about the indoor temperature or other damage. Further, the current systems typically don't give any facts about the actual room temperatures for maintenance. Typically the tuning of the heating system is done during the installation but after that the indoor temperatures fluctuate to unknown levels. Fixing and tuning require physical site visits which are time consuming, irritating for inhabitants and costly and take place a considerable time after the actual fault or onset of deteriorating has started.

The known water radiator thermostats typically have a fixed sensitivity and control behavior. The actual room heating response is not detected nor applied to improve the heating accuracy or save energy consumption leading to over or under dimensioned heating, out of range temperature levels and fluctuations in indoor temperature as well as waste of heating energy. Similarly the potential intended night or day time heating drop typically fails in some parts of the building because the heating response is not understood accurately in time domain.

The typical current water heating systems do not take any actions to predict changing outdoor weather conditions which leads to undesirable indoor temperatures, discomfort as well as waste of heating energy. Advanced systems have been proposed in the past, where the weather forecasting is applied to control the heat exchanger operation. The actual room temperature behavior is however not known or only utilized averaged or estimated based on a limited amount of samples and thus the same fact of undesirable indoor temperatures, discomfort as well as waste of heating energy applies even to these known advanced system solutions.

As elaborated here, the typical existing heating systems do not make any procedures to learn and adapt their system operation based to the building or enclose thermal behavior. There are systems known to the inventors that only collect factual data of the heating performance on the building level. Variation between different rooms or apartments is typically not known. Defects in building structures or other significant local issues in heating performance are hidden into the average of building heating. Thus repairs and other maintenance can't be focused to correct locations.

Reference is made to the following ensemble of documents disclosing known techniques as such, according to the preamble part of the independent claims

US 2013/140016 A1 discloses a power-sensing circuit for wireless zone sensors,
EP 208 442 A1 discloses thermostat adaptively controlling space temperature,
WO 2011/121299 A1 discloses a building occupancy dependent control system,
EP 915300 A2 discloses a room pressure control apparatus having feedforward and feedback control and method,
WO 2009/072744 A2 discloses a device for control room temperature of each room adapted to heating environment and its method,
US 5 395 042 A discloses an apparatus and method for automatic climate control, M.MOZER, L.VIDMAR, R.DODIER: "The Neurothermostat: Predictive Optimal Control of Residential Heating Systems", in NEURAL INFORMATION PROCESSING SYSTEMS 9, 1997, pages 953-959, XP002724514, MA, USA discloses a predictive optimal control of residential heating systems as such.

## Summary of the invention

It is an object of the present invention to implement such a solution, that previously mentioned drawbacks of the prior art could be diminished. In particular, the invention is implied to solve how to implement a heating control system so that a desired temperature level in different zones of a building can be adjusted and maintained without excessively fluctuating indoor temperatures, discomfort and waste of heating energy.

A distributed adaptive and predictive heating control system according to the present invention is characterized in that what has been said in the characterizing part of the independent claim 1.

A distributed adaptive and predictive heating control method according to the present invention is characterized in that what has been said in the characterizing part of the independent claim 2.

Further, the invention discloses a heating control system where the conditions significant to a particular zone or room of the building can be taken in to account when controlling the climate of that particular zone or room. Even further, the < present invention discloses a system and method to establish a solution to heating control, where learning, adaptive and predictive qualities enable a way of adjusting and maintaining an appropriate inside climate while allowing for a feasible way to adapt to periodically varying conditions, demands, building usage etc. to save heating energy.

Significant advantages can be achieved with the present invention when compared to the prior art solutions. The system and its architecture according to the present invention finds particular use in context of water radiator enabled building heating. The new system architecture makes a new way to control the indoor air temperature at the room granularity. Further, the system collects factual measured indoor temperature at the room granularity. The system can give operating parameters and control water heated radiator thermostats individually.

By using the room level measured constantly cumulating factual information the system architecture according to the present invention centrally optimizes the locally autonomously working thermostat to better adapt the heating controller to local room factual conditions.

The system according to the present invention can further optimize the thermostat behavior to the room and its environment based on the factual measured and predicted environmental data. Even further, the by nature parallel optimized room thermostats operation can be inter-correlated to perform heating control optimization at the building level. The system notices, notifies and automatically reacts to intended or unintended illogical control or parameters of inter-correlated thermostats of e.g. adjacent rooms. The system according to the present invention performs optimized control according to one or more rules, as an example, to minimize energy consumption, to maintain an accurate indoor temperature, to maintain temperature above some specified minima or under specified maxima, to make controlled trade-offs etc.

The thermostats of the here disclosed system adapt to local conditions as the system learns the actual behavior from the factual long term data which are applied to further optimize the thermostat operating parameters. Similarly the factual long term data is applied to optimize inter-correlation of thermostats and overall building heating control performance accordingly.

A further application of the cumulated measured data as disclosed herein makes it possible to summarize accurate facts based reports of local room temperatures, deviations in room temperature inside building, faults in the heating system, energy consumption and respective. The system architecture according to the present invention collects a cumulating database of factual measured room temperature and other similar information like humidity, indoor air quality indicators like $CO_2$ etc. to enable accurate reports for e.g. building maintenance, energy efficiency and respective purposes. The herein disclosed system is able to compare heating performance of different parts of the building based on the factual measured facts and use that information to direct building or heating system maintenance and repair to correct locations. The herein disclosed system performs automatically analysis to detect disparity between demand values and reached values as either as input for redefinition of new operating parameters or as an indicator of fault.

The adapting thermostat operating parameters tuning algorithm learns from the statistical measured data how to predict the actual room heating need based on the regional weather forecast. Interpolation and extrapolation as well fuzzy logic methods are applied to define the predicted heating need.

Further, as disclosed herein, the system is robust and tolerates equipment failures. The thermostats work autonomously to keep the local temperature in set limits in case of short or long term accidental or intentional connection loss to the central computing. The central computing supports potential thermostat replacement by storing the history data as well as the thermostat facts based analysis results and respective parameters which can be updated into a replacing thermostat.

A further aspect of the system according to the present invention is that it enables to produce an actual heating performance based energy classification for a building, apartment or room taking into account the used energy and actual room temperature in addition to the basic building construction data.

Even further, the herein disclosed system may be utilized to centrally set limits to the local control of room temperature. The system can show the actual room level indoor temperature and store and show the history. The system can calculate the apartment specific heating cost based on the actual room temperature. The system can centrally limit the indoor temperature. This allows for example to limit the peak heating power consumption of the regional heat power station by limiting the indoor temperature of selecting certain buildings.

The system can show the factual measured data of the optional other sensors and store and show the history.

The stored history data of rooms, apartments and buildings can be applied to calculate heating and other, for example CO2 and humidity, performance statistics for comparisons. The data can be applied to fine tune the regional heating system overall heating power. The historical data and statistics can also be applied to perform factual comparisons between buildings

The system according to the present invention may be used for radiator valve testing and control by an active method detecting minimum and maximum position of the thermostat valve after thermostat installation. The opening percentage is later always known and the centralized system can use the information for control and calculations. Any limitations or changes to previous measurements in the valve dynamics can be detected. The information can be applied for preventive maintenance purposes like indicating lack pressure in heating pipes or to localize the very typical stuck valve hazard or cumulated air inside of a radiator. The accurate information of the valve position also minimizes the need for valve control thus minimizing the battery consumption

The system according to the present invention further is adapted to learn to make a controlled daytime or nightly temperature drop in for example office buildings by having an automatic system to adapt the magnitude and timing of the temperature drop by controlling the heating by autonomous thermostats to ensure maximal energy saving but still ensuring the indoor temperature reaches the desired temperature before the user defined working hours and/or turning on the air conditioning.

The system learns the building heating need and especially time domain response in different outdoor temperature conditions using statistical methods.

**Short description of the drawings**

The invention is described in more detail with reference to the appended drawings, in which

Fig. 1 illustrates an exemplary embodiment of the system according to the present invention.

Fig. 2 illustrates an exemplary embodiment of a time domain performance according to the present invention.

Fig. 3 illustrates an exemplary embodiment of energy saving temperature drops according to the present invention.

**Detailed description of the embodiments**

The system and method according to the present invention will now be described in more detail by reference to exemplary embodiments following the teachings of the disclosed invention.

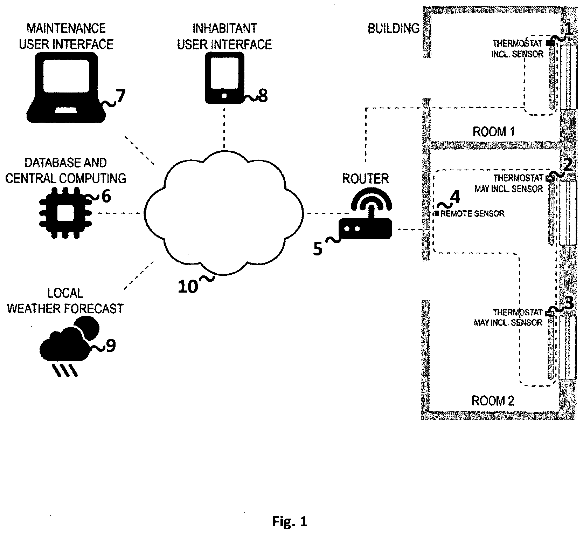

According to Fig. 1, two rooms are presented. Room 1 has a first thermostat 1 including a sensor. Room 2 has two thermostats 2, 3 that each may optionally have a sensor. Room 2 has additionally a remote temperature sensor 4. On the system level, the first thermostat and the measurements made by its sensor are associated with Room 1. The second and third thermostats and the remote sensor and their measurements are associated with Room 2. The heating control of Room 1 is associated with the control performed by the first thermostat and the heating control of Room 2 is associated to the control performed by the second and third thermostats. A router 5 establishes a connection between said three thermostats, remote sensor and the central computing entity 6. The system according to the embodiment of the present invention further has a maintenance and inhabitant user interface 7, 8 to enable for example installation configuration of the system, for run time reporting, maintenance alerts and setting of desired temperature levels or schedules. The embodiment further has a weather forecast interface 9, where forecast data may be received to be processed to yield weather parameters, such as forecasted temperature levels relative to future time instances or intervals. The connections and communication 10 between the different entities of the system may be carried out using any known or future suitable wireless or wired connection or combination thereof.

The distributed adaptive and predictive heating control system and method according to the present invention is a PID controller tuning and gain scheduling system and method. More precisely, according to an embodiment of the present invention, the one or more thermostats of the disclosed system are proportional-integral-derivative controllers (PID controllers) or generic control loop feedback mechanism controllers. A thermostat as such calculates an error value *e(t)* as the difference between a measured process variable and a desired set point at a time instance t. The thermostat attempts to minimize the error by adjusting the heat/temperature management process control inputs to adjust process elements such as for example the position of a control valve or the power supplied to a heating element.

The PID controller calculation algorithm involves three separate parameters, and is accordingly sometimes called three-term control: the proportional, the integral and derivative values, denoted P, I, and D. These values can be interpreted in terms of time: P depends on the present error, I on the accumulation of past errors, and D is a prediction of future errors, based on a gradient of the error at time *t*. The proportional, integral, and derivative terms are summed to calculate the output of the PID controller. Defining *u(t)* as the controller output, the form of the PID algorithm can be written as:

$$u(t) = K_p e(t) + K_i \int_0^t e(\tau)d\tau + K_d \frac{d}{dt}e(t)$$

As evident to a person skilled in the art, the terms $K_p$, $K_i$ and $K_d$ refer to the proportional, integral and derivative gains of the control corrective terms that are the subject of said tuning and gain scheduling mentioned earlier to achieve the optimum values for a desired control response.

According to the present invention, said tuning and gain scheduling is achieved by processing of the central computing entity by receiving periodically or continuously measurement values and associated time instances from one or more thermostats and optional sensors. The tuning and gain scheduling, referred herein as learning, adaptation and predicting, is further achieved by determining the control response and error *e(t)* based on these received measurements and observing the response stability, sensitivity, overshoot, settling rate, noise error etc. to adjust the thermostat PID-parameters, as needed and as disclosed herein.

The proportional term of the thermostat controller produces an output value that is proportional to the current error value. The proportional response can be adjusted by multiplying the error by its gain. If the controller response to the error is too slow, increasing the gain will make the controller more sensitive to the difference between measured temperature and the desired temperature. If the gain is too large, it results in instability of the control and has to be decreased but avoiding a proportional gain so low, that the control action becomes too small when responding to system disturbances. Tuning theory and industrial practice indicate that the proportional term should contribute the bulk of the output change. Because a non-zero error is required to drive the proportional controller, it generally operates with a steady-state error or an added compensating bias term to the set point or output, or dynamically added integral term.

The integral term is proportional to both the magnitude of the error and the duration of the error and may be defined as the sum of the instantaneous error over time. The term describes the cumulative offset of the control response relative to the desired set point. The integral term by means of its gain multiplier accelerates the movement of the process towards set point and eliminates the residual steady-state error that occurs with a pure proportional controller. The integral term responds to cumulative error of the control response and may attribute to overshoot the set point value.

Derivative term predicts system behavior by its gain parameter and the instantaneous gradient of the error and thus improves settling time and stability of the system. Its inherent sensitivity to measurement noise can be manage additionally to adjusting its gain by passing the measured error through a linear low-pass filter or a nonlinear median filter.

The thermostat PID controller has the initial set of parameters stored in the production. Those parameters have been defined in to represent optimal heating quality with most efficient energy consumption. The parameters are calculated using for example an improved Cohen-Coon algorithm together with measured and simulated model buildings behavior. After installation the thermostat starts to operate with the initial parameter set. The thermostat uploads the actual temperature and proportional valve opening information to central computing. After certain period of time the cumulated data is applied to define a more optimum set of parameters using a mathematical model such as an improved Cohen-Coon algorithm for optimizing the PID controller. The procedure is repeated periodically or continuously to reach optimized response and also keep track of the potential unacceptable decay or faults in the heating system.

By adjusting the PID-parameters and observing stability, sensitivity, overshoot, settling rate, noise error etc. the optimized PID-parameters for an enclosure under desired control may be achieved.

According to the present invention, an enclosure is modeled as the control response behavior of the enclosure under a control defined by a set of PID-parameters to the prevailing conditions. The control response according to the present invention and an exemplary embodiment thereof is an enclosure temperature representation as a function of time, calculated from temperature measurements associated with the enclosure and measurement (relative) time instants.

The temperature outside the enclosure, whether outside the building or within the building influences the behavior of the enclosure and can be seen in its response curve. The influence depends on structures, openings, insulation etc. of the boundaries of the enclosure and the temperature difference relative to the enclosure. The PID-parameters can further be optimized by observing stability, sensitivity, overshoot, settling rate, noise error etc. of the control response relative to measured outside temperatures, measured enclosure temperature and the desired temperature.

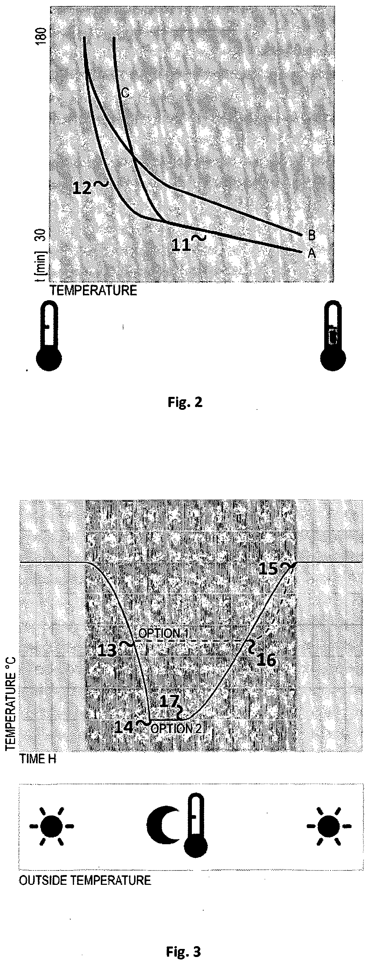

Even further, modeling an enclosure thermal properties indirectly by a set of control response behavior curves, according to the present invention, a thermostat and building heating time domain performance relative to the absolute heating power available and the outdoor temperature is calculated. An embodiment of said time domain performance is illustrated in Fig. 2. The time domain performance of three heated rooms are described as the time required to heat the room to desired temperature from a lower staring temperature as a function of outdoor temperature. In Fig. 2 the room A and C heating behavior are similar but the radiator absolute heating power is less in room C which limits the temperature range in very cold outdoor temperature condition. The room B has least heating power for the heated space but its insulation is most efficient.

The time domain performance according to the present invention and an exemplary embodiment thereof is calculated using control response curves associated with different outside temperatures. The control response defines the time duration relationship to a temperature difference taking place relative to a given outside temperature. Thus a representation of the time domain performance of an enclosure as in Fig. 2 is calculated using one or more control response curves of the enclosure and optionally interpolating and extrapolating to arrive at a curve describing the time it takes for the enclosure to heat from a starting temperature to and end temperature as a function of outside temperature. The curves in Fig. 2 depict the typically observed linear and nonlinear behavior regions 11, 12 of an enclosure relative to outside temperature. More generally, the time domain performance according to the present invention is calculated from temperature measurements associated with the enclosure and measurement (relative) time instants and associated outside temperatures of said enclosure, the calculation optionally including interpolating, extrapolating, using statistical methods, fuzzy logic reasoning, model fitting or any other appropriate method of utilizing said measurements.

As described herein, the thermostat according to the present invention possesses an adaptive learning behavior by having a first set of (default) controller parameters that are optimized periodically or continuously. The optimization according to the present invention is achieved by the thermostat providing periodically or continuously temperature measurements from the room or zone where it resides to the central computing entity. The entity calculates a second set of controller parameters to optimize the controller performance in the particular room by processing a set of measured temperatures, each measurement having an associated time instant or a relative time difference/distance relative to other measurements. Thus, a control response of the enclosure can be defined as a temperature behavior relative to time and desired temperature level, or as a time dependent representation of error *e(t)*. Further, the measurements provided to the central computing entity may include temperature measurements representing a temperature outside the thermostat local enclosure, having a similar and comparable associated notion of time as the enclosure temperatures have. The operation is repeated periodically or continuously to learn the optimized set of parameters.

The optimization according to an embodiment of the present invention further comprises of a thermostat possessing a predictive learning behavior. Knowing the control response of the enclosure at a given outside temperature or the effect of the outside temperature on the control response, it is possible to optimize the control of the enclosure temperature to maximally save heating energy and avoid overshooting or undershooting the desired enclosure temperature, when outside conditions change. More precisely, the thermostat and building heating time domain performance is used to determine advanced corrective control changes that reflect the thermal behavior of the enclosure.

Even further, the central computing unit may receive predictive temperature values. To this end, any present or future parsing method may be utilized in connection to the present invention, to yield from a weather forecast data or service a set of parameters representing a predicted weather, such as local temperatures with associated times of day, days of week etc.

The predictive temperature values may also be predicted temperature values of other enclosures of a building, outside the enclosure under consideration. Such temperatures can be predicted using the control response and time domain performance curves of these other enclosures.

The system has, as a result from the learning and adaptation optimization process, knowledge of the thermal behavior of the enclosure and the effect of the outside temperature on said thermal behavior, with associated optimized PID-parameters as well as other operating parameters such as timing and magnitude of energy saving indoor temperature drop. The system can match the predicted outside temperature variation to the nearest measured data and schedule accordingly PID-parameters to the thermostats to yield the best available control response to the present temperature in the room and the demand applying to the room.

The local weather forecast is utilized to avoid over heating the room above a set limit as well as going below a set lowest acceptable room temperature. The system learns the time domain performance of each room by said adaptive learning behavior. Using that information the central computing sends the local thermostat parameters how the thermostat optimally takes the forecasted outdoor temperature change into account to save energy and keep the indoor temperature within the set limits.

More precisely, the optimization and scheduling according to the embodiment of the present invention comprises a timing of the predictive behavior. The time domain performance defines the actual time advance of the temperature based on the measured room control response. The timing adapts the advance also to the magnitude of the forecasted outdoor temperature change. The system adapts to the local room behavior using the above described adaptive learning behavior.

The thermostat receives parameters from the central computing reflecting optimized PID controller performance to match with the room need, predicted weather fore-cast impact to room temperature and related to the magnitude and timing of the energy saving temperature drop. The thermostat may further have a settable range defining a lowest and highest temperature which the local user can set as target indoor temperature. The local user can set desired room temperature to the thermostat using thermostat user interface within these acceptable limits. The thermostat preferably has safety limits for lowest room temperature and highest room temperature that may occur in any circumstances.

According to an embodiment of the present invention the system further has a schedule and target temperature for energy saving temperature and/or day time room temperature drop. More generally, the heating control of the enclosures of the building may be timed to optimize against various goals. The system and method according to the present invention finds particular use in energy saving. The uploaded and /or external sensors uploaded temperature measurement results are periodically or continuously applied to calculate a new set of thermostat PID controller parameters as disclosed herein to further optimize the heating response. The optimization process is learning where the improvement versus the previous response and parallel thermostat optimization results are also applied to define the most desirable parameter set. This way the thermostat parameters adapt optimally to local conditions to maximally save heating energy.

The central computing calculates the thermostat and building heating time domain performance taking into account the absolute heating power available as well as the outdoor temperature. The time domain performance is applied for example in timing to perform the energy saving temperature drop function or outdoor temperature prediction based energy saving compensation optimally to save as much energy as much as possible.

Fig. 2 shows a thermal behavior difference between three heated rooms. The room A and C heating behavior are similar but the radiator absolute heating power is less in room C which limits the temperature range in very cold outdoor temperature condition. The room B has least heating power for the heated space but its insulation is most efficient. Based on the these uploaded measured facts statistics the central computing calculates the optimum timing and magnitude of the energy saving temperature drop taking into account the forecasted outdoor temperature and the predicted heating energy need to come back to maximally save energy during the drop. The calculated information is downloaded to thermostats as control parameters.

The correct timing and magnitude of the energy saving temperature drop avoid losing more energy than saved during the drop while heating back to normal temperature and/or being late in time with the normal temperature. Especially in the air conditioned building it is vitally important to have desired temperature before the air conditioning is turned on.

The calculated time domain behavior the central computing defines the optimal timing and magnitude of the thermostat predictor function. The predictor will thus limit radiator heating power optimally before the outdoor temperature will start to rise. As the optimization is performed in room level the historical statistics of the forecasted outdoor temperature and e.g. sunshine are taken into account. The learning from the statistics enables to eliminate need of manually editing room window direction, floor level and similar parameters.

The energy saving temperature drop timing is an adaptation which takes into account the time domain response of the particular room heating transfer function as well as the nonlinear effect of the outdoor temperature due to the practical limits of the heating power. The initial timing and magnitude are based on the conservative simulated values. The adaptation is performed to tune both the timing and magnitude of the drop by carefully changing the timing and magnitude and cumulating respective actual measured indoor and outdoor temperature values. The timing and magnitude adaptation process with the statistics of the energy consumption results as an optimal performance for the particular room.

Fig. 3 describes two optimized energy saving temperature drops in different conditions. Option 1 has a higher drop temperature 13 than Option 2 and the heating back to the start level temperature 15 may be delayed until a time 16 given by the time domain performance of said enclosure at prevailing outside temperature defining the time it takes to heat from drop to start level temperature. Option 2 has a lower drop 14 temperature and results in an earlier heating start time 17, as it takes longer for the enclosure to reach the start level of temperature. Both options are optimized scheduled temperature drops that using the time domain performance of the present invention reach the desired temperature level at the desired point of time. Whether Option 1 or Option 2 results in a better drop temperature energy saving implementation depends on the amount of energy saved maintaining the drop temperature and the energy needed to reheat the enclosure. According to the present invention, this energy saving can be optimized, because the method and system of the present invention describes the enclosure as a time domain performance defining for each feasible drop level the possible drop time and needed heating time and the energy saving can be optimized knowing energy needed to maintaining a certain drop temperature and the energy needed to reheat the enclosure (per unit time) when the outside temperature variation is predicted (or assumed constant, averaged etc.).

According to the present invention and the teachings disclosed herein, the thermostat autonomously controls the local room temperature using said received PID-parameters and set demand values and operational limits.

The central computing unit of the present invention according to the embodiment calculates PID controller parameters and other operating parameters to local thermostats based on the thermostats and /or external sensors uploaded temperature or other measured (for example $CO_2$ and humidity) tracing information. The capability to use external temperature sensor readings to control the thermostat resolves many issues of traditional system like vulnerability to a blocked air flow around the radiator thermostat which traditionally leads to too low heating a the room.

Further, based on the magnitude of the needed parameter update the central computing can detect non-acceptable drifting or sudden change of the room and or building heating conditions to either warn from minor decay or alarm malfunctioning of the heating system.

As a further advantage of the present invention, the system can be set to limit the peak heating energy consumption by enabling to set a building or in a room level selected drop of the maximum allowed indoor temperature during for example very cold weather as the time domain performance curves enables to determine circumstances, where maintaining a set level starts to be costly because of the thermal limitations of the building or part thereof.

**Claims**

1. A distributed adaptive and predictive heating control system comprising one or more thermostats, a central computing entity and optional one or more sensors,
   said one or more thermostats further being arranged to control the local temperature of an associated enclosure according a first set of parameters and operational settings, and to transmit measured temperature data periodically or continuously to the central computing entity, and
   said central computing entity having a user interface, further being arranged to receive and collect data from one or more thermostats and optional one or more sensors, and to receive and collect operational settings through said user interface,
   said optional one or more sensors further being arranged to transmit measured data periodically or continuously to the central computing entity,
   at least one of said thermostats is arranged to receive a second set of control parameters from the central computing entity replacing the first set of parameters, and
   said central computing entity is arranged to

   - periodically or continuously calculate a control response of at least one of said thermostats associated enclosure based on said received and collected data, and further arranged to calculate a second set of parameters based on said control response and transmit said second set of parameters to a thermostat,
   - calculate a time domain performance of a thermostat associated enclosure based on said received and collected data or one or more said control responses of a thermostat associated enclosure and associated measured outside temperatures,
   - calculate a heat control timing for an enclosure based on said time domain performance and one or more predicted temperatures outside the enclosure,

   the system being, **characterized in that**
   said predicted temperature outside the enclosure is a temperature prediction of an enclosure based on the heat response of that enclosure or a temperature prediction outside a building based on a local weather forecast data received via a weather forecast interface (9) in the system.

2. A distributed adaptive and predictive heating control method where a thermostat controls a temperature of an associated enclosure according to a first set of parameters and operational settings and distributed temperature measurements are collected periodically or continuously, the method comprising of periodically or continuously

   - calculating a control response of an enclosure by organizing temperature measurements associated with said enclosure as a function of time,
   - calculating a second set of control parameters of a thermostat controlling said enclosure temperature based on control response of the enclosure, and

- replacing said first set of control parameters of the thermostat with said second set of control parameters,
- calculating a time domain performance of a thermostat associated enclosure based on said collected data of a thermostat associated enclosure and associated measured outside temperatures or one or more said control responses of a thermostat associated enclosure and associated measured outside temperatures by determining a temperature difference and an associated time for said temperature difference to realize,
- calculating a heat control timing for an enclosure based on said time domain performance and one or more predicted temperatures outside the enclosure,

the method being **characterized in that**

- said predicted temperature outside the enclosure is a temperature prediction of an enclosure based on the heat response of that enclosure or a temperature prediction outside a building based on a weather forecast data received via a weather forecast interface (9).

3. The method according to claim 2, **wherein**
said predicting of temperature outside the enclosure is based on a heat response of another enclosure of a building or a temperature prediction outside a building based on a received local weather forecast data.

4. The method according to claim 2, further **comprising**
identifying a deviation or fault in a control system by observing a difference in measured real time control response or time domain performance of an enclosure relative to the calculated control response or time domain performance of an enclosure.

5. The method according to claim 2, further **comprising**
calculating a heating energy difference per unit time between a higher enclosure temperature and a lower enclosure temperature relative to a time interval and the predicted outside temperatures during said time interval,
defining a time duration of heating said enclosure from said lower temperature to said higher temperature based on the time domain performance of said enclosure,
calculating a first energy amount by integrating said heating energy difference per unit time from the start of said time interval to a time point having a distance greater or equal of said time duration of heating relative to the end of said time interval,
calculating a second energy amount corresponding to heating said enclosure from said lower temperature to said higher temperature starting at the time point having a distance greater or equal of said time duration of heating relative to the end of said time interval, and
varying the difference between the higher and lower enclosure temperature and the time point to optimize an energy saving temperature drop by maximizing the difference of said first energy amount relative to said second energy amount.

**Patentansprüche**

1. Ein verteiltes adaptives und prädiktives Heizungssteuersystem mit einem oder mehreren Thermostaten, einer zentralen Recheneinheit und optional mit einem oder mehreren Sensoren,
wobei eine oder mehrere Thermostate überdies so angeordnet sind, dass die lokale Temperatur eines zugeordneten Gehäuses gemäß einer ersten Reihe von Parametern und Betriebseinstellungen gesteuert wird und gemessene Temperaturdaten periodisch oder kontinuierlich zu der zentralen Recheneinheit übertragen werden, und
wobei die zentrale Recheneinheit eine Benutzerschnittstelle aufweist, die dafür eingerichtet ist, Daten von einem oder mehreren Thermostaten und optional einem oder mehreren Sensoren zu empfangen und zu sammeln und Betriebseinstellungen über die Benutzerschnittstelle zu empfangen und zu sammeln,
wobei optionale ein oder mehrere Sensoren überdies so angeordnet sind, dass Messdaten periodisch oder kontinuierlich an die zentrale Recheneinheit übertragen werden,
überdies ist wenigstens eines der Thermostate angeordnet, um einer zweiten Reihe von Steuerparametern von der zentralen Recheneinheit zu empfangen, die die erste Reihe von Parametern ersetzt, und
wobei die zentrale Recheneinheit angeordnet ist, um

- Periodisches oder kontinuierliches Berechnen einer Steuerreaktion in mindestens einem der dem Thermostaten zugeordneten Gehäuse auf der Grundlage der empfangenen und gesammelten Daten und das überdies eingerichtet ist zum Berechnen einer zweiten Reihe von Parametern auf der Grundlage der Steuerantwort und die Übertragung der zweiten Reihe von Parametern zu einem Thermostaten,
- Berechnen einer Zeitbereichsleistung eines mit dem Gehäuse verbundenen Thermostats auf der Grundlage der empfangenen und gesammelten Daten oder eines oder mehreren der besagten Steuerantworten eines Thermostat zugehörigen Gehäuses und zugehöriger gemessener Außentemperaturen,
- Berechnen einer Wärmeregelungszeitsteuerung für ein Gehäuse basierend auf der Zeitbereichsleistung und einer oder mehreren vorhergesagten Temperaturen außerhalb des Gehäuses,

wobei das System **dadurch gekennzeichnet ist, dass**

- die vorhergesagte Temperatur außerhalb des Gehäuses ist eine Temperaturvorhersage eines Gehäuses auf der Grundlage der Wärmereaktion des Gehäuses oder einer Temperaturvorhersage außerhalb eines Gebäudes basierend auf lokale Wettervorhersagedaten, die über eine Wetterprognoseschnittstelle (9) in dem System empfangen werden.

2. Ein verteiltes adaptives und prädiktives Heizungssteuerverfahren, bei dem ein Thermostat eine Temperatur eines zugehörigen Gehäuses gemäß einer ersten Reihe von Parametern und übergeordneten Einstellungen und verteilten Temperaturmessungen periodisch oder kontinuierlich sammelt, wobei das Verfahren periodisch oder kontinuierlich folgendes umfasst:

- Berechnen einer Steuerantwort eines Gehäuses durch Organisieren von Temperaturmessungen, die mit dem Gehäuse verbunden sind, als Funktion der Zeit,
- Berechnen einer zweiten Reihe von Steuerparametern eines Thermostaten, die die Umgebungstemperatur auf der Grundlage der Steuerantwort des Gehäuses steuert, und
- Ersetzen der erwähnten ersten Reihe von Steuerparametern des Thermostaten durch die erwähnte zweite Reihe von Steuerparametern,
- Berechnen einer Zeitleistungsausführung eines Thermostaten zugeordneten Gehäuses basierend auf den gesammelten Daten des zugehörigen Thermostatgehäuses und der zugehörigen gemessenen Außentemperaturen oder einem oder mehreren der Steuerantworten des zugehörigen Thermostatgehäuses und der zugeordneten gemessenen Außentemperaturen durch das Bestimmen einer Temperaturdifferenz und einer zugehörigen Zeit für diese Temperaturdifferenz,
- Berechnen einer Wärmeregelungszeit für ein Gehäuse auf der Grundlage der erwähnten ausgeführten Zeitleistung und einen oder mehreren vorhergesagten Temperaturen außerhalb des Gehäuses,

wobei das Verfahren **dadurch gekennzeichnet ist, dass**

- die erwähnte vorhergesagte Temperatur außerhalb des Gehäuses auf der Grundlage der Wärmereaktion dieses Gehäuses oder einer Temperaturvorhersage außerhalb eines Gebäudes auf der Basis von Wettervorhersagedaten ist, die über eine Wetterprognoseschnittstelle (9) empfangen werden.

3. Verfahren nach Anspruch 2, **wobei**
die Vorhersage der Temperatur außerhalb des Gehäuses auf der Grundlage einer Wärmereaktion eines anderen Gehäuses in dem Gebäude oder einer Temperaturvorhersage außerhalb des Gebäudes basierend auf empfangenen lokalen Wettervorhersagedaten.

4. Verfahren nach Anspruch 2, **dadurch gekennzeichnet, dass**
eine Abweichung oder ein Fehler in einem Steuersystem durch Beobachten einer Differenz der gemessenen Echtzeitregelantwort oder Zeitbereichsleistung eines Gehäuses relativ zu der berechneten Steuerantwort oder Zeitbereichsleistung eines Signals im Gehäuse ermittelt wird.

5. Verfahren nach Anspruch 2, **dadurch gekennzeichnet, dass**
das Berechnen einer Heizenergiedifferenz pro Zeiteinheit zwischen einer höheren Umschließungstemperatur und einer niedrigeren Umschließungstemperatur relativ zu einem Zeitintervall und den vorhergesagten Außentemperaturen während dieses Zeitintervalls,
die Definierung der Zeitdauer des Erhitzens des Gehäuses von der niedrigeren Temperatur auf die höhere Temperatur, basierend auf der Zeitbereichsleistung des Gehäuses,
Berechnen einer ersten Energiemenge durch Integrieren der Heizenergiedifferenz pro Zeiteinheit vom Beginn des Zeitintervalls bis zu einem Zeitpunkt, der eine Distanz aufweist, die größer oder gleich der Zeitdauer des Erhitzens relativ zu dem Ende des Zeitintervalls ist,

Berechnen einer zweiten Energiemenge entsprechend dem Erwärmen des Gehäuses von der niedrigeren Temperatur auf wobei die höhere Temperatur an dem Zeitpunkt beginnt, an dem eine Distanz größer oder gleich der Zeitdauer der Erhitzung relativ zu dem Ende des Zeitintervalls ist, und
Variieren der Differenz zwischen der höheren und der niedrigeren Einschließungstemperatur und dem Zeitpunkt, um eine Energieeinsparungstemperatur zu optimieren indem die Differenz der ersten Energiemenge relativ zu der zweiten Energiemenge maximiert wird.

**Revendications**

1. Un système de commande de chauffage réparti capable de s'adapter et d'établir des prévisions, comprenant un ou plusieurs thermostats, une unité informatique centrale et un ou plusieurs détecteurs optionnels,
un ou plusieurs desdits thermostats étant programmé pour contrôler la température d'une pièce raccordée selon un premier ensemble de réglages et de paramètres d'exploitation, ainsi que de transmettre des mesures de température de façon périodique ou continue à l'unité informatique centrale, et
ladite unité informatique centrale possédant une interface utilisateur, programmée pour recevoir et compiler des données à partir d'un ou plusieurs thermostats et d'un ou plusieurs détecteurs optionnels, et pour recevoir et compiler des paramètres d'exploitation sur ladite interface utilisateur,
un ou plusieurs desdits détecteurs optionnels étant programmés pour transmettre des mesures périodiquement ou continuellement à l'unité informatique centrale,
au moins un desdits thermostats programmé pour recevoir un deuxième ensemble de paramètres de commande de l'entité informatique centrale pour remplacer le premier ensemble de paramètres, et
ladite entité informatique centrale programmée pour

- calculer périodiquement ou continuellement une réponse de commande pour au moins une desdites pièces raccordées à un thermostat, en se basant sur lesdites données compilées, et également programmée pour calculer un deuxième ensemble de paramètres en se basant sur ladite réponse de commande et pour transmettre un deuxième ensemble de paramètres à un thermostat,
- calculer la performance temporelle d'une pièce raccordée à un thermostat en se basant sur lesdites données reçues et compilées d'une ou plusieurs réponses de commande d'une pièce raccordée à un thermostat, ainsi que sur les températures extérieures mesurées associées,
- calculer une période de régulation de la chaleur pour une pièce en se basant sur ladite performance temporelle et sur une ou plusieurs prévisions de température à l'extérieur de la pièce,

le système ayant pour caractéristiques
ladite température prédite à l'extérieur de la pièce étant une prévision de température de pièce basée sur le retour de chaleur de cette pièce ou une prévision de température à l'extérieur du bâtiment basée sur des données issues de prévisions météorologiques locales reçues par l'entremise d'une interface de prévisions météorologiques (9) dans le système.

2. Une méthode de contrôle du chauffage, capable de s'adapter et d'établir des prévisions, dans laquelle un thermostat contrôle la température de la pièce raccordée selon le premier ensemble de paramètres et les paramètres d'exploitation, et les prises de température réparties sont effectuées périodiquement ou continuellement, la méthode étant périodique ou continue

- calculer une réponse de commande d'une pièce en organisant les prises de température associées à ladite pièce en tant que fonction temporelle,
- calculer un second ensemble de paramètres de commande d'un thermostat contrôlant la température de ladite pièce en se basant sur la réponse de commande de la pièce, et
- remplacer ledit premier ensemble de paramètres de commande du thermostat par ledit deuxième ensemble de paramètres de commande,
- calculer la performance dans le domaine temporel d'une pièce raccordée à un thermostat en se basant sur lesdites données compilées d'une pièce raccordée à un thermostat et sur les prises de température extérieure associées ou une ou plusieurs desdites réponses de commande d'une pièce raccordée à un thermostat et les prises de température extérieure en déterminant une différence de température et une période associée pour que ladite différence de température soit réalisée,
- calculer une période de régulation de la chaleur pour une pièce en se basant sur ladite performance dans le domaine temporel et sur une ou plusieurs prévisions de température à l'extérieur de la pièce,

la méthode ayant pour caractéristique

    - ladite température prédite à l'extérieur de la pièce étant une prévision de température de pièce basée sur le retour de chaleur de cette pièce ou une prévision de température à l'extérieur du bâtiment basée sur des données issues de prévisions météorologiques reçues par l'entremise d'une interface de prévisions météorologiques (9).

**3.** La méthode selon la revendication 2, dans lequel
ladite température prédite à l'extérieur de la pièce est basée sur le retour de chaleur d'une autre pièce du bâtiment ou sur une prévision de température à l'extérieur du bâtiment basée sur les données issues de prévisions météorologiques locales reçues.

**4.** La méthode selon la revendication 2, comportant également
l'identification d'une déviation ou d'un défaut dans un système de commande en comparant les différences de réponses de commandes mesurées en temps réel ou dans la performance temporelle d'une pièce relative à la réponse de commande calculée ou dans la performance temporelle d'une pièce.

**5.** La méthode selon la revendication 2, comportant également
le calcul d'une différence de chauffage par unité temporelle, dans une pièce, entre une haute et une basse température, dans un intervalle de temps donné et selon la température extérieure prédite pendant ledit intervalle,
la détermination d'une période de chauffage de ladite pièce de ladite basse température à ladite haute température en se basant sur la performance dans temporelle de ladite pièce,
le calcul d'une première quantité d'énergie en intégrant ladite différence de chauffage par unité temporelle à partir du début dudit intervalle de temps jusqu'à un point dans le temps ayant une distance supérieure ou égale à ladite durée de chauffage par rapport à la fin de l'intervalle de temps,
le calcul d'une deuxième quantité d'énergie correspondant au chauffage de ladite pièce à partir de ladite basse température à ladite haute température à partir du point dans le temps ayant une distance supérieure ou égale à ladite durée de chauffage par rapport à la fin de l'intervalle de temps, et
la capacité de faire varier la différence entre la haute et la basse température de la pièce et le point dans le temps pour optimiser une baisse de température écoénergétique en maximisant la différence de ladite première quantité d'énergie par rapport à ladite deuxième quantité d'énergie.

MAINTENANCE
USER INTERFACE

INHABITANT
USER INTERFACE

BUILDING

THERMOSTAT
INCL. SENSOR

1

7

8

ROOM 1

DATABASE AND
CENTRAL COMPUTING

6

ROUTER

THERMOSTAT
MAY INCL. SENSOR

2

4

REMOTE SENSOR

5

LOCAL
WEATHER FORECAST

10

THERMOSTAT
MAY INCL. SENSOR

3

9

ROOM 2

**Fig. 1**

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013140016 A1
- EP 208442 A1
- WO 2011121299 A1
- EP 915300 A2
- WO 2009072744 A2
- US 5395042 A

**Non-patent literature cited in the description**

- **M.MOZER ; L.VIDMAR ; R.DODIER.** The Neurothermostat: Predictive Optimal Control of Residential Heating Systems. *NEURAL INFORMATION PROCESSING SYSTEMS,* 1997, vol. 9, 953-959